(19) Europäisches Patentamt / European Patent Office / Office européen des brevets

(11) **EP 3 965 340 B1**

(12) **EUROPEAN PATENT SPECIFICATION**

(45) Date of publication and mention of the grant of the patent:
**21.08.2024   Bulletin 2024/34**

(21) Application number: **20195017.7**

(22) Date of filing: **08.09.2020**

(51) International Patent Classification (IPC):
**H04L 5/00** *(2006.01)*

(52) Cooperative Patent Classification (CPC):
**H04L 5/0069; H04L 5/0051;** H04L 5/0007

(54) **ACCESS NODE, USER EQUIPMENT, APPARATUSES, METHODS AND COMPUTER PROGRAMS FOR DETERMINING A TIME-FREQUENCY GRID AND PILOT CONFIGURATION FOR A RADIO LINK BETWEEN TWO TRANSCEIVERS OF A MOBILE COMMUNICATION SYSTEM**

ZUGANGSKNOTEN, BENUTZERGERÄT, VORRICHTUNGEN, VERFAHREN UND COMPUTERPROGRAMME ZUR BESTIMMUNG EINES ZEIT-FREQUENZ-RASTERS UND PILOTKONFIGURATION FÜR EINE FUNKVERBINDUNG ZWISCHEN ZWEI SENDEEMPFÄNGERN EINES MOBILKOMMUNIKATIONSSYSTEMS

NOEUD D'ACCÈS, ÉQUIPEMENT UTILISATEUR, APPAREILS, PROCÉDÉS ET PROGRAMMES INFORMATIQUES PERMETTANT DE DÉTERMINER UNE GRILLE DE TEMPS-FRÉQUENCE ET CONFIGURATION DE PILOTE POUR UNE LIAISON RADIO ENTRE DEUX ÉMETTEURS-RÉCEPTEURS D'UN SYSTÈME DE COMMUNICATION MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.03.2022   Bulletin 2022/10**

(73) Proprietor: **VOLKSWAGEN AG**
**38440 Wolfsburg (DE)**

(72) Inventors:
• **PFADLER, Andreas**
  **13357 Berlin (DE)**
• **STANCZAK, Slawomir**
  **10587 Berlin (DE)**
• **JUNG, Peter**
  **10587 Berlin (DE)**

(74) Representative: **2SPL Patentanwälte PartG mbB**
**Landaubogen 3**
**81373 München (DE)**

(56) References cited:
**US-A1- 2003 064 733     US-A1- 2018 109 284**
**US-A1- 2020 045 562**

**Description**

The invention is defined by the appended claims.

Embodiments of the present disclosure relate to an access node, user equipment, apparatuses methods, and computer programs for determining a time-frequency grid and pilot configuration for a radio link between two transceivers of a mobile communication system, more particularly, but not exclusively to a concept for adapting time-frequency grid and pilot configuration to a time and frequency dispersion (delay spread and Doppler shift) condition of a radio channel.

New requirements in terms of reliability and efficiency in high mobility environments, such as vehicle-to-vehicle (V2V) communication, are pushing legacy systems to their limits. Orthogonal frequency-division multiplexing (OFDM) is a popular and well-known modulation scheme but it may suffer from substantial performance degradation and inflexibility in environments with high Doppler spreads. Consequently, novel modulation schemes may be considered and perused which are flexible, efficient and robust in doubly-dispersive channels.

Future vehicular communication systems require high reliability and efficiency under various mobility conditions. Furthermore, they are multilateral as different types of communication links exist. Vehicles are connected to infrastructure, i.e. vehicle-to-infrastructure (V2I), but also using direct vehicle-to-vehicle (V2V) communication. Especially, V2V channels are distinct compared to conventional cellular channels. For communication between high mobility users, large Doppler shifts are expected due to the large relative velocity. Legacy systems, such as OFDM, may experience considerable performance degradation under high Doppler shifts, cf.

T. Wang, J. G. Proakis, E. Masry, and J. R. Zeidler, "Performance degradation of ofdm systems due to doppler spreading," IEEE Transactions on Wireless Communications, vol. 5, no. 6, pp. 1422-1432, 2006, and
P. Jung and G. Wunder, "Wssus pulse design problem in multicarrier transmission," IEEE Transactions on Communications, vol. 55, no. 9, pp. 1822-1822, 2007.

New modulation schemes such as orthogonal time frequency and space (OTFS) address the challenges for future communication systems. The key idea behind OTFS is to multiplex a data symbol (e.g. QAM, quadrature amplitude modulation) in the signal representation called the delay-Doppler representation. OTFS was introduced by Hadani et. al as a promising recent combination of classical pulse-shaped Weyl-Heisenberg (or Gabor) multicarrier schemes with a distinct time-frequency (TF) spreading. Data symbols are spread with the symplectic finite Fourier transform (SFFT) over the whole time-frequency grid. This particular linear pre-coding accounts for the doubly-dispersive nature of time-varying multipath channels seen as linear combinations of time-frequency shifts. Several studies show that OTFS outperforms OFDM in such situations. Other research focus on a performance comparison of OFDM, generalized frequency division multiplexing (GFDM), and OTFS. It reveals significant advantages of OTFS in terms of bit error rate (BER) and frame error rate (FER) in relation to the others. With sufficient accurate channel information it offers a promising increase in terms of reliability and robustness for high mobility users when using sophisticated equalizers. So far, OTFS was researched with the assumption of perfect grid-matching, often with idealized pulses violating the uncertainty principle and in many cases with ideal channel knowledge (including the cross-talk channel coefficients).

OTFS is a new modulation scheme that addresses the challenges of 5th Generation mobile communication systems (5G). The key idea behind OTFS is to multiplex a QAM (quadrature amplitude modulation) or QPSK (Quadrature Phase Shift Keying) symbol (data) in the delay-Doppler signal representation. In order to do channel equalization, the wireless channel needs to be estimated at the receiver. This can be done by the insertion of pilots at the transmitter. The a-priory known pilot tones can be used by the receiver to estimate the channel.

Document US 2020/0014512 A1 relates to a mobile communication device, comprising: a receiver, configured to receive a radio signal over a radio channel, the radio signal comprising a predetermined pilot preamble; and a processor, configured to determine mobility information, in particular a Doppler and/or a Delay Spread, based on the pilot preamble, wherein the processor is further configured to signal the mobility information to a second communication device. The disclosure further relates to a base station, comprising: a receiver, configured to receive mobility information, in particular a Doppler and/or a Delay Spread, signaled by a mobile communication device; and a processor, configured to select a numerology based on the mobility information and to generate a radio signal for transmission to the communication device based on the numerology.

Document US 2018/0049073 A1 describes a base station, which receives, from a wireless device, a message comprising a first sequence of a plurality of parameters. A first parameter in the first sequence indicates whether a V2X transmission configuration is supported in a first band combination. The first band combination may be in a second sequence of a plurality of band combinations associated with the wireless device. An index of the first parameter in the first sequence identifies the first band combination in the second sequence. A second message may be transmitted based on the message. The second message comprises configuration parameters of at least one cell for V2X communications. The at least one cell operates in one of the plurality of band combinations that supports the V2X transmission configuration.

Xitao Gong (HWDU) "Preliminary results for multi-service support in link solution adaptation" of Project "Flexible Air iNTerfAce for Scalable service delivery wiThin wireless Communication networks of the 5th Generation (FANTASTIC-5G)", May 2016, advocates a single air interface for 5G, which is flexible, versatile, and scalable in order to address the requirements of the beyond 2020 era. The flexibility of the FANTASTIC-5G air interface allows the support of a multitude of foreseen and unforeseen services/applications with diverse requirements, such as Mobile Broadband (MBB), Massive Machine Communications (MMC), Mission Critical Communications (MCC), Broadcast/Multicast Communications (BMS) and Vehicular-to-anything communications (V2X).

Document US 2020/0045562 A1 discloses methods of using OTFS pilot symbol waveform bursts to automatically produce a detailed 2D model of a channel state. This 2D channel state can then be used to optimize data transmission. For wireless data channels, an even more detailed 2D model of channel state can be produced by using polarization and multiple antennas in the process. Once 2D channel states are known, the system turns imperfect data channels from a liability to an advantage by using channel imperfections to boost data transmission rates. The methods can be used to improve legacy data transmission modes in multiple types of media and are particularly useful for producing new types of robust and high capacity wireless communications using non-legacy OTFS data transmission methods.

Document US 2003/0064733 A1 provides a terminal location estimation method capable of accurately estimating a location of a mobile terminal when providing information services according to the location of the terminal in a radio communication system. A positioning server sends a location measurement probe message to the mobile terminal in order to measure the location of the terminal. Each of base stations receives a response message broadcasted from the terminal, measures the reception level and delay spread and sends the measurement results to the positioning server. The positioning server has a radio wave propagation estimating portion and a database for storing estimation results thereof. The server estimates the location of the terminal by checking the measurement results of the base stations against the estimation results on radio wave propagation stored in the database.

It is therefore a challenge to specify configurations for an air interface that takes into account different radio channel characteristics. There is a demand for an improved concept for radio link configurations.

This demand is accommodated by the subject-matter of the independent claims.

Embodiments are based on the finding that a time-frequency grid configuration for a radio link can be made adaptive together with a pilot configuration. The time-frequency grid and pilot configuration can be based on a delay spread and a Doppler shift of the radio link. These parameters may be determined from a relative velocity between two transmitters and predetermined information on the delay spread.

Embodiments provide a method for determining a time-frequency grid and pilot configuration for a radio link between two transceivers of a mobile communication system. The method comprises obtaining information on a relative velocity between the two transceivers and retrieving predetermined information on a delay spread of a radio channel between two transceivers. The method further comprises deriving the time-frequency grid configuration for the radio link based on the information on the relative velocity and based on the information on the delay spread and determining the pilot configuration in relation to the time-frequency grid. Embodiments enable adaptation of a time-frequency grid and pilot configuration related thereto based on a delay-Doppler condition of a radio channel.

The pilot configuration may be determined in a delay-Doppler domain. Embodiments may enable adaptation of the pilot configuration to the delay-Doppler characteristics in the delay-Doppler domain, which may enable pilot configuration tailored to the channel characteristics, be it for OTFS, OFDM or any other waveform.

In further embodiments one of the two transceivers may be static and the other of the two transceivers may be mobile. The obtaining of the information on the relative velocity may comprise communicating information on a velocity of the transceiver, which is mobile. Knowledge on a velocity of the mobile transceiver may enable estimation of a Doppler shift of the radio channel.

The determining of the information on the delay spread may be based on a location of the mobile transceiver. Embodiments may use predetermined radio channel information for different locations.

For example, the transceiver, which is static, is an access node of the mobile communication system. Embodiments may determine relative velocities for Doppler shift estimation and delay spread radio maps relative to a base station or access node of the mobile communication system. The transceiver, which is mobile, may be a vehicle and embodiments may enable efficient channel estimation in vehicular communication. Furthermore, the deriving may be further based on information on driving directions and/or information on a future planned trajectory of the vehicle. Information on future or planned trajectories of vehicles may be used in embodiments.

In some embodiments the retrieving of the predetermined information on the delay spread is based on delay spread information stored in a data base. A data base may enable efficient restoring of delay spread information for a radio channel. For example, the data base comprises a three-dimensional radio map of delay spreads. Embodiments may enable efficient granularity, may be even in the third dimension, for storing radio maps.

The deriving of the time-frequency grid configuration may further comprise selecting one out of a limited group of mobility modes, the mobility modes having different time-frequency grid configurations. Embodiments may select from a predefined group of mobility modes to enable efficient selection and time-efficient assignment of a time-frequency grid and pilot configuration. In some embodiments the method may further comprise measuring information on the delay spread and storing the information on the delay spread. Embodiments may enable efficient sensing and updating of the predetermined delay spread information.

Embodiments further provide a computer program having a program code for performing one or more of the above described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

Another embodiment is an apparatus for determining a time-frequency grid configuration for a radio link between two transceivers of a mobile communication system. The apparatus comprises a transceiver module for communicating in the mobile communication system and a processing module, which is configured to control the transceiver module and to perform at least one method as described herein. An access node of a wireless communication system comprising an embodiment of the apparatus is another embodiment. User equipment for a wireless communication system comprising an embodiment of the apparatus is yet another embodiment.

Some other features or aspects will be described using the following non-limiting embodiments of apparatuses or methods or computer programs or computer program products by way of example only, and with reference to the accompanying figures, in which:

Fig. 1 illustrates a block diagram of an embodiment of a method for determining a time-frequency grid and pilot configuration for a radio link between two transceivers of a mobile communication system;

Fig. 2 illustrates a block diagram of an embodiment of an apparatus for determining a time-frequency grid configuration for a radio link between two transceivers of a mobile communication system, an embodiment of an access node, and an embodiment of user equipment; and

Fig. 3 illustrates multi-carrier Gabor pulse designing rules for ideal and efficient communication dependent on the channel delay and Doppler shifts in an embodiment.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail.

Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes" or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

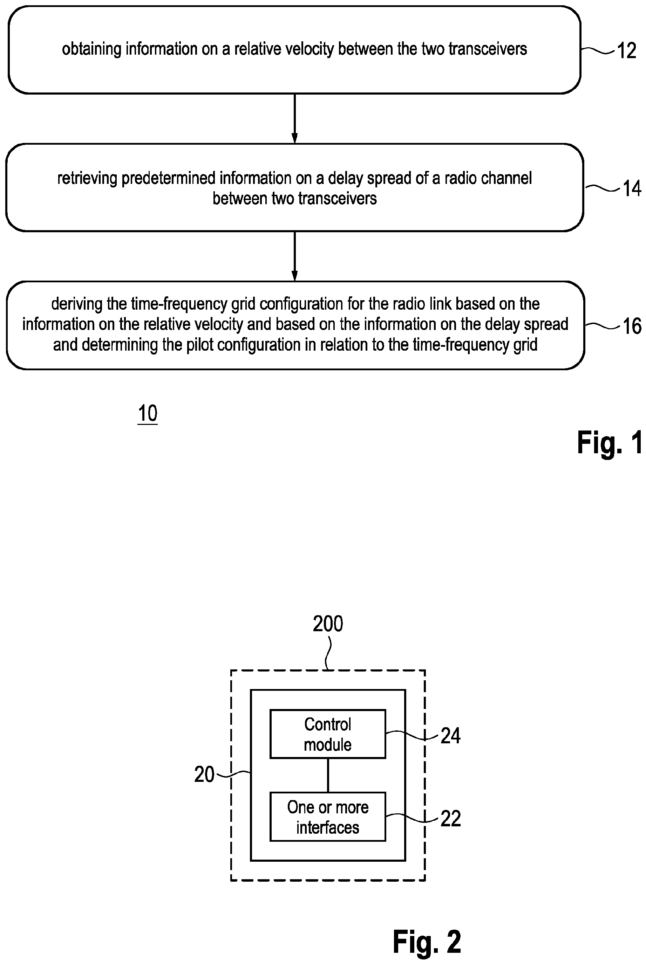

Fig. 1 illustrates a block diagram of an embodiment of a method 10 for determining a time-frequency grid and pilot configuration for a radio link between two transceivers of a mobile communication system. The method 10 comprises obtaining 12 information on a relative velocity between the two transceivers and retrieving 14 predetermined information on a delay spread of a radio channel between two transceivers. The method 10 further comprises deriving 16 the time-frequency grid configuration for the radio link based on in the information on the relative velocity and based on the information on the delay spread and determining the pilot configuration in relation to the time-frequency grid.

For example, the relative velocity can be used to derive or estimate a maximum Doppler shift of the radio channel. The maximum Doppler shift may be one determining factor for time-frequency (TF) grid selection and pilot configuration. For example, the higher the maximum Doppler spread the wider a subcarrier spacing and/or a subcarrier bandwidth in the TF grid. The predetermined delay spread information may be another determining factor. For example, the longer a delay spread in the radio channel the longer a symbol duration in the TF grid. In some embodiments the pilot configuration is determined in a delay-Doppler domain. This may enable to match a pilot symbol distribution to the actual inter-symbol interference generated by a current channel realization, which may enable a higher efficiency. Such pilot insertion or determination in the delay-Doppler domain may be carried out independently of the waveform, e.g. in any multicarrier system, OFDM, OTFS, etc.

Fig. 2 illustrates a block diagram of an embodiment of an apparatus 20 for determining a time-frequency grid configuration for a radio link between two transceivers of a mobile communication system, an embodiment of an access node, and an embodiment of user equipment. The apparatus 20 for determining a time-frequency grid configuration for a radio link between two transceivers of the mobile communication system comprises a transceiver module 22 for communicating in the mobile communication system and a processing module 24, which is coupled to the transceiver module 22. The processing module 24 is configured to control the transceiver module 22 and to perform at least one of the methods 10 described herein.

The apparatus 20 may be comprised in another entity 200, which is shown in broken lines in Fig. 2 as it is optional from the perspective of the apparatus 20. The other entity 200 may be an access node of the mobile communication system or user equipment/vehicle comprising an embodiment of the apparatus 20.

The transceiver module 22 may be implemented as any means for transmitting, receiving or transceiving, i.e. receiving and/or transmitting etc., one or more transmitter/receiver units, one or more transmitter/receiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc. In some embodiments, the processing module 24 may provide some functionality that may be found in transceiver modules. For example, the processing module 24 may be a processing module of the transmitter/receiver/transceiver module 22 and may comprise one or more filters or filter circuitry and/or one or more modulators or demodulators.

In embodiments the processing module 24 may be implemented using one or more processing units, one or more processing devices, any means for processing, such as a processor, a computer or a programmable hardware component being operable with accordingly adapted software. In other words, the described function of the processing module 24 may as well be implemented in software, which is then executed on one or more programmable hardware components. Such hardware components may comprise a general-purpose processor, a Digital Signal Processor (DSP), a micro-controller, etc. The respective processing module 24 may be configured to carry out any of the methods 10 described herein. The wireless devices may be any devices of a wireless communication system using OTFS or OFDM, e.g. a mobile communication system, a broadcast system, a unicast system etc.

The apparatus 20 and the vehicle, control center, or network component 200 may communicate at least partly through a mobile communication system. The mobile communication system, may, for example, correspond to one of the Third Generation Partnership Project (3GPP)-standardized mobile communication networks, where the term mobile communication system is used synonymously to mobile communication network. Data and control information may hence be communicated through multiple network nodes (e.g. internet, router, switches, etc.) and the mobile communication system, which generates the delay or latencies considered in embodiments.

The mobile or wireless communication system may correspond to a mobile communication system of the 5th Generation (5G, or New Radio) or beyond and may use mm-Wave technology. The mobile communication system may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Service provision may be carried out by a network component, such as a base station transceiver, a relay station or a UE, e.g. coordinating service provision in a cluster or group of multiple UEs/vehicles. A base station transceiver can be operable or configured to communicate with one or more active mobile transceivers/vehicles and a base station transceiver can be located in or adjacent to a coverage area of another base station transceiver, e.g. a macro cell base station transceiver or small cell base station transceiver. Hence, embodiments may provide a mobile communication system comprising two or more mobile transceivers/vehicles and one or more base station transceivers, wherein the base station transceivers may establish macro cells or small cells, as e.g. pico-, metro-, or femto cells. A mobile transceiver or UE may correspond to a smartphone, a cell phone, a laptop, a notebook, a personal computer, a Personal Digital Assistant (PDA), a Universal Serial Bus (USB) -stick, a car, a vehicle, a road participant, a traffic entity, traffic infrastructure etc. A mobile transceiver may also be referred to as User Equipment (UE) or mobile in line with the 3GPP terminology. A vehicle may correspond to any conceivable means for transportation, e.g. a car, a bike, a motorbike, a van, a truck, a bus, a ship, a boat, a plane, a train, a tram, etc.

A base station transceiver can be located in the fixed or stationary part of the network or system. A base station transceiver may be or correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a gNodeB, a Base Transceiver Station (BTS), an access point, a remote radio head, a relay station, a transmission point, etc., which may be further subdivided in a remote unit and a central unit.

A mobile transceiver or vehicle can be associated with a base station transceiver or cell. The term cell refers to a coverage area of radio services provided by a base station transceiver, e.g. a NodeB (NB), an eNodeB (eNB), a gNodeB, a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. A base station transceiver may operate multiple sectorized antennas. In the following, a cell may represent an according base station transceiver generating the cell or, likewise, a base station transceiver may represent a cell the base station transceiver generates.

The apparatus 20 may be comprised in a server, a base station, a NodeB, a UE, a vehicle, a network component, a relay station, or any service coordinating network entity in embodiments. It is to be noted that the term network component may comprise multiple sub-components, such as a base station, a server, etc.

In embodiments the transceiver module 22 may comprise or implement one or more interfaces, which may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces may comprise further components to enable according communication in the (mobile) communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces may be coupled to one or more antennas, which may correspond to any transmit and/or receive antennas, such as horn antennas, dipole antennas, patch antennas, sector antennas etc. In some examples the one or more interfaces may serve the purpose of transmitting or receiving or both, transmitting and receiving, information, such as information, input data, control information, further information messages, etc.

In embodiments, communication, i.e. transmission, reception or both, may take place among mobile transceivers/vehicles directly, e.g. forwarding input data or control information to/from a control center. Such communication may make use of a mobile communication system. Such communication may be carried out directly, e.g. by means of Device-to-Device (D2D) communication. Such communication may be carried out using the specifications of a mobile communication system. An example of D2D is direct communication between vehicles, also referred to as Vehicle-to-Vehicle communication (V2V), car-to-car, Dedicated Short Range Communication (DSRC), respectively. Technologies enabling such D2D-communication include 802.11p, 3GPP systems (4G, 5G, NR and beyond), etc.

In embodiments, the transceiver module 22 can be configured to wirelessly communicate in the mobile communication system, e.g. in an embodiment in which the apparatus 20 is implemented in a vehicle and the method 10 is carried out at the vehicle. In order to do so radio resources are used, e.g. frequency, time, code, and/or spatial resources, which may be used for wireless communication with a base station transceiver as well as for direct communication. The assignment of the radio resources may be controlled by a base station transceiver, i.e. the determination which resources are used for D2D and which are not. Here and in the following radio resources of the respective components may correspond to any radio resources conceivable on radio carriers and they may use the same or different granularities on the respective carriers. The radio resources may correspond to a Resource Block (RB as in LTE/LTE-A/LTE-unlicensed (LTE-U)), one or more carriers, sub-carriers, one or more radio frames, radio sub-frames, radio slots, one or more code sequences potentially with a respective spreading factor, one or more spatial resources, such as spatial sub-channels, spatial precoding vectors, any combination thereof, etc. For example, in direct Cellular Vehicle-to-Anything (C-V2X), where V2X includes at least V2V, V2-Infrastructure (V2I), etc., transmission according to 3GPP Release 14 onward can be managed by infrastructure (so-called mode 3) or run in a UE.

However, for both waveforms OTFS and OFDM a transform is used to transform the symbols from the time-frequency domain to the time domain. This central transformation is called Gabor transform (or also refer as Weyl-Heisenberg signaling). The Gabor filterbank is responsible for the generation of the waveform and the transmit pulse which is often matched with the receive pulse.

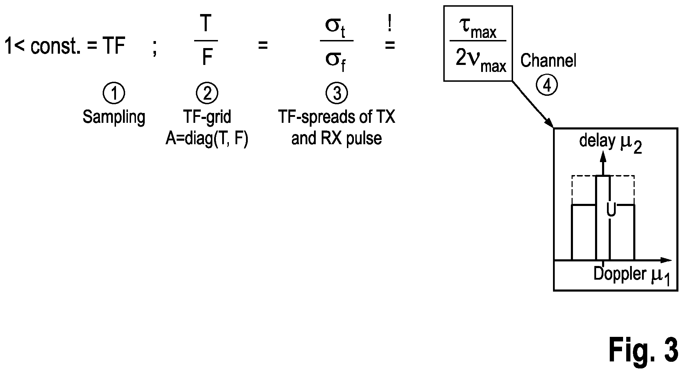

An important aspect for the Gabor signaling (creating the waveform) is the design of the pulse and the time-frequency grid matching, because TF-grid matching depends on the communication channel i.e. delay and Doppler spread. Fig. 3 depicts how the grid and pulses should match the channel realization from a theoretical viewpoint. With so called mobility modes embodiments may intend to be as close as possible to the equality in Fig. 3.

Fig. 3 illustrates multi-carrier Gabor pulse designing rules for ideal and an efficient communication in dependency on the channel delay and Doppler shifts in an embodiment. Fig. 3 illustrates four steps 1, 2, 3, 4 from left to right. In order to enable proper sampling (multipath resolution) a time-frequency/bandwidth product TF should be

$$TF = const > 1,$$

as shown in step 1 of Fig. 3. Moreover, in a TF-grid the relation (step 2)

$$T/F$$

of a symbol duration T over the subcarrier bandwidth F equals (step 3)

$$\sigma_t/\sigma_f,$$

which is the relation of the channel's time variance $\sigma_t$ (delay spread) over the channel's frequency variance $\sigma_f$ (Doppler shift).

These variances express the spreads of the TX and RX pulses in the TF domain. In embodiments these relations may be chosen such that they match

$$\tau_{max}/(2\nu_{max})$$

as much as possible as indicated in step 4 of Fig. 3. $\tau_{max}$ represents the maximum delay spread of the radio channel and $\nu_{max}$ represents the maximum Doppler shift. Fig. 3 further indicates a delay-Doppler plane showing two different channel realizations, with different maximum delay and Doppler spreads.

Embodiments may enable a time-frequency grid matching and pulse shaping for multicarrier signaling waveforms under changing mobility conditions and hence changing communication/radio channel. Fig. 3 shows the four steps which need to be taken into account in order to obtain an (theoretically) ideal TF-grid matching and an efficient system in embodiments.

In practical embodiments the ratio of the time and frequency grid T/F needs to be close to the ratio between the delay ($\tau_{max}$) and Doppler ($2\nu_{max}$) spread of the communication channel.

In some embodiments, first, the transmitter needs to know the communication channel in advance (delay, and Doppler spread, cf. 12 and 14 in Fig. 1) and second the receiver needs to know the used grid matching and pulse design of the transmitter in order to be able to demodulate the waveform in a most efficient way. The method 10 may hence comprise communicating information on the time-frequency grid configuration and pilot configuration. Depending on the type and conditions of communication the ratio of (delay/2 Doppler spread) is varying. Some embodiments choose T, F grid matching and transmit and receive pulse depending on the ratio delay/Doppler of the communication/radio channel: The ratio $\tau_{max}/(2\nu_{max})$ depends on:

- ◦ relative speed of transmitter and receiver.
- ◦ Delay spreads. This information is related to the different multipaths.

For example, one of the two transceivers is static and the other of the two transceivers is mobile. The transceiver, which is mobile, may be a vehicle and the transceiver, which is static, is an access node of the mobile communication system. The obtaining 12 of the information on the relative velocity may then comprise communicating information on a velocity of the transceiver, which is mobile. The retrieving 14 of the information on the delay spread can be based on a location of the transceiver, which is mobile.

For example, a geographical 3-D radio map with a data base of delay spreads may be stored in the system, e.g. on a server. For locations relative to an access node or a base station of the mobile communication system the radio map may store information on a delay spread of the respective radio channel between said location and the access node or base station. The retrieving 14 of the predetermined information on the delay spread is based on delay spread information stored in the data base/on the server. The data base comprises a three-dimensional radio map of delay spreads. In some embodiments the radio map may be updated, e.g. the method 10 may comprise measuring information on the delay spread and storing the information on the delay spread. That way, the data base can be updated, for example, a time cycle for measuring the radio channel and updating the data base may be implemented. Such a cycle may be once an hour, a day, one a week, once a month, etc.

Moreover, a vehicle may share its speed, driving directions, and future planned trajectory (e.g. up to approx. 5s, 10s, 20s, etc.). The deriving 16 may be further based on information on driving directions and/or information on a future planned trajectory of the vehicle.

A base station or access node may then manage the resource allocation depending on the estimated best grid configuration (mobility mode) and may then derive and assign the TF grid and pilot configuration. The deriving 16 of the time-frequency grid configuration may further comprise selecting one out of a limited group of mobility modes. The mobility modes have different time-frequency grid configurations. For example, a mobility mode may be defined by a combination of a certain symbol duration and subcarrier spacing and a pilot configuration related thereto. In some embodiments different pilot configurations (constellation of pilot and guard symbols) may be used for the same time-frequency grid in different mobility modes. For example, a pilot density in the time and frequency domains may dependent on a coherence time and bandwidth of the radio channel and different modes (pilot configurations) may be used in embodiments for the same symbol duration and subcarrier spacing.

Furthermore, the base station or access node may maintain the data base with the radio map.

For example, the following mobility modes may be used in an embodiment:

| Mode | N | M | T | F | T/F |
|------|-----|-----|---------|------------|------------|
| OFDM | 64 | 64 | 0.125$\mu$s | 156.25kHz | 8e-13 |
| I | 64 | 64 | 0.125$\mu$s | 156.25kHz | 8e-13 |
| II | 32 | 128 | 0.5$\mu$s | 79.125kHz | 6.4e-12 |
| III | 128 | 32 | 31.25ns | 312.5kHz | 1e-13 |
| IV | 16 | 256 | 2$\mu$s | 39.063kHz | 5.12e-11 |
| V | 256 | 16 | 62.5ns | 625kHz | 1.25e-14 |
| VI | 8 | 512 | 8$\mu$s | 19.531 kHz | 4.096e-10 |
| VII | 512 | 8 | 1.953ns | 1250kHz | 1,5625e-15 |

These mobility modes may be used to reduce the self-interference caused by grid and pulse mismatches and coping with different channel conditions, i.e. distinct delay and Doppler spreads. The frequency resolution is F=MB, where B is the overall bandwidth and M the number of subcarriers. The time resolution is T=ND, with D being the frame duration and N the number of time symbols. The TF grid is sampled with T and F period in the time and frequency domain, respectively.

The mobility modes may be defined and/or adapted based on a long-term expectation of the radio channel. The proposed mobility modes are aiming to reduce the impact of self-interference. The remaining self-interference power may then be estimated and used for linear equalization. The above table presents the mobility modes I to XII in an embodiment. In further embodiments other mobility modes and sets of mobility modes to select from may be defined. The higher the resolution in time (N symbols), the fewer resolution in frequency domain (M subcarrier) and vice versa. Mode I represents the case for equal time and frequency resolution. Each mobility mode therefore may use its own pulse shape. Transmitter and the receiver may use the same mode. The appropriate mode can be selected depending on the second order statistic of the channel.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage.

Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

**List of reference signs**

| 10 | method for determining a time-frequency grid and pilot configuration for a radio link between two transceivers of a mobile communication system |
| 12 | obtaining information on a relative velocity between the two transceivers |
| 14 | retrieving predetermined information on a delay spread of a radio channel between two transceivers |
| 16 | deriving the time-frequency grid configuration for the radio link based on in the information on the relative velocity and based on the information on the delay spread and determining the pilot configuration in relation to the time-frequency grid |
| 20 | apparatus for determining a time-frequency grid configuration for a radio link between two transceivers of a mobile communication system for a wireless receiver device |
| 22 | transceiver module |
| 24 | processing module |
| 200 | network entity, access node, user equipment, vehicle |

**Claims**

**1.** A method (10) for determining a time-frequency grid and pilot configuration for a radio link between two transceivers of a mobile communication system, the method (10) comprising

obtaining (12) information on a relative velocity between the two transceivers;

retrieving (14) predetermined information on a delay spread of a radio channel between two transceivers; and deriving (16) the time-frequency grid configuration for the radio link based on the information on the relative velocity and based on the information on the delay spread and determining the pilot configuration in relation to the time-frequency grid.

2. The method (10) of claim 1, wherein the pilot configuration is determined in a delay-Doppler domain.

3. The method (10) of one of the claim 1 or 2, wherein one of the two transceivers is static and the other of the two transceivers is mobile and wherein the obtaining (12) of the information on the relative velocity comprises communicating information on a velocity of the transceiver, which is mobile.

4. The method (10) of claim 3, wherein the retrieving (14) of the information on the delay spread is based on a location of the transceiver, which is mobile.

5. The method (10) of one of the claims 3 or 4, wherein the transceiver, which is static, is an access node of the mobile communication system.

6. The method (10) of one of the claims 3 to 5, wherein the transceiver, which is mobile, is a vehicle.

7. The method (10) of claim 6, wherein the deriving (16) is further based on information on driving directions and/or information on a future planned trajectory of the vehicle.

8. The method (10) of one of the claims 1 to 7, wherein the retrieving (16) of the predetermined information on the delay spread is based on delay spread information stored in a data base.

9. The method (10) of claim 8, wherein the data base comprises a three-dimensional radio map of delay spreads.

10. The method (10) of one of the claims 1 to 9, wherein the deriving (16) of the time-frequency grid configuration further comprises selecting one out of a limited group of mobility modes, the mobility modes having different time-frequency grid configurations.

11. The method (10) of one of the claims 1 to 10, further comprising measuring information on the delay spread and storing the information on the delay spread.

12. A computer program having a program code for performing at least one method (10) according to one of the claims 1 to 11, when the computer program is executed on a computer, a processor, or a programmable hardware component.

13. An apparatus (20) for determining a time-frequency grid and pilot configuration for a radio link between two transceivers of a mobile communication system, the apparatus (20) comprising:

a transceiver module (22) for communicating in the mobile communication system; and
a processing module (24) configured to:

control the transceiver module (22), and
to perform at least one method (10) according to one of the claims 1 to 11.

14. An access node (200) of a wireless communication system comprising the apparatus (20) of claim 13.

15. User equipment (200) for a wireless communication system comprising the apparatus (20) of claim 13.


**Patentansprüche**

1. Verfahren (10) zum Bestimmen eines Zeit-Frequenz-Rasters und einer Pilotkonfiguration für eine Funkverbindung zwischen zwei Senderempfängern eines mobilen Kommunikationssystems, wobei das Verfahren (10) umfasst

Erhalten (12) von Informationen über eine relative Geschwindigkeit zwischen den beiden Senderempfängern;

Abrufen (14) von vorbestimmten Informationen über eine Verzögerungsspanne eines Funkkanals zwischen zwei Senderempfängern; und

Ableiten (16) der Zeit-Frequenz-Rasterkonfiguration für die Funkverbindung basierend auf den Informationen über die Relativgeschwindigkeit und basierend auf den Informationen über die Verzögerungsspanne und Bestimmen der Pilotkonfiguration in Bezug auf das Zeit-Frequenz-Raster.

2. Verfahren (10) nach Anspruch 1, wobei die Pilotkonfiguration in einem Verzögerungs-Doppler-Bereich bestimmt wird.

3. Verfahren (10) nach einem der Ansprüche 1 oder 2, wobei einer der beiden Senderempfänger statisch und der andere der beiden Senderempfänger mobil ist und wobei das Erhalten (12) der Informationen über die Relativgeschwindigkeit das Kommunizieren von Informationen über eine Geschwindigkeit des Senderempfängers umfasst, der mobil ist.

4. Verfahren (10) nach Anspruch 3, wobei das Abrufen (14) der Informationen über die Verzögerungsspanne auf einer Position des Senderempfängers basiert, der mobil ist.

5. Verfahren (10) nach einem der Ansprüche 3 oder 4, wobei der Senderempfänger, der statisch ist, ein Zugangsknoten des mobilen Kommunikationssystems ist.

6. Verfahren (10) nach einem der Ansprüche 3 bis 5, wobei der Senderempfänger, der mobil ist, ein Fahrzeug ist.

7. Verfahren (10) nach Anspruch 6, wobei das Ableiten (16) ferner auf Informationen über Fahrtrichtungen und/oder Informationen über eine zukünftig geplante Bewegungsbahn des Fahrzeugs basiert.

8. Verfahren (10) nach einem der Ansprüche 1 bis 7, wobei das Abrufen (16) der vorbestimmten Informationen über die Verzögerungsspanne auf den in einer Datenbank gespeicherten Verzögerungsspanneninformationen basiert.

9. Verfahren (10) nach Anspruch 8, wobei die Datenbank eine dreidimensionale Funkkarte von Verzögerungsspannen umfasst.

10. Verfahren (10) nach einem der Ansprüche 1 bis 9, wobei das Ableiten (16) der Zeit-Frequenz-Rasterkonfiguration ferner das Auswählen einer aus einer begrenzten Gruppe von Mobilitätsmodi umfasst, wobei die Mobilitätsmodi unterschiedliche Zeit-Frequenz-Rasterkonfigurationen aufweisen.

11. Verfahren (10) nach einem der Ansprüche 1 bis 10, das ferner das Messen von Informationen über die Verzögerungsspanne und das Speichern der Informationen über die Verzögerungsspanne umfasst.

12. Computerprogramm mit einem Programmcode zum Durchführen mindestens eines Verfahrens (10) nach einem der Ansprüche 1 bis 11, wenn das Computerprogramm auf einem Computer, einem Prozessor oder einer programmierbaren Hardwarekomponente ausgeführt wird.

13. Vorrichtung (20) zum Bestimmen eines Zeit-Frequenz-Rasters und einer Pilotkonfiguration für eine Funkverbindung zwischen zwei Sendeempfängern eines mobilen Kommunikationssystems, wobei die Vorrichtung (20) umfasst:

ein Senderempfängermodul (22) zum Kommunizieren in dem mobilen Kommunikationssystem; und
ein Verarbeitungsmodul (24), das dazu konfiguriert ist:

das Senderempfängermodul (22) zu steuern, und
mindestens ein Verfahren (10) nach einem der Ansprüche 1 bis 11 durchzuführen.

14. Zugangsknoten (200) eines drahtlosen Kommunikationssystems, der die Vorrichtung (20) nach Anspruch 13 umfasst.

15. Benutzergerät (200) für ein drahtloses Kommunikationssystem, das die Vorrichtung (20) nach Anspruch 13 umfasst.

**Revendications**

1. Procédé (10) de détermination d'une configuration pilote et de grille temps-fréquence pour une liaison radio entre deux émetteurs-récepteurs d'un système de communication mobile, le procédé (10) comprenant :

   l'obtention (12) d'informations sur une vitesse relative entre les deux émetteurs-récepteurs ;
   la récupération (14) d'informations prédéterminées sur un étalement de retard d'un canal radio entre deux émetteurs-récepteurs ; et
   la déduction (16) de la configuration de grille temps-fréquence pour la liaison radio sur la base des informations sur la vitesse relative et sur la base des informations sur l'étalement de retard et la détermination de la configuration pilote par rapport à la grille temps-fréquence.

2. Procédé (10) selon la revendication 1, dans lequel la configuration pilote est déterminée dans un domaine Doppler de retard.

3. Procédé (10) selon l'une des revendications 1 ou 2, dans lequel l'un des deux émetteurs-récepteurs est statique et l'autre des deux émetteurs-récepteurs est mobile et dans lequel l'obtention (12) des informations sur la vitesse relative comprend la communication d'informations sur une vitesse de l'émetteur-récepteur, qui est mobile.

4. Procédé (10) selon la revendication 3, dans lequel la récupération (14) des informations sur l'étalement de retard est basée sur un emplacement de l'émetteurrécepteur, qui est mobile.

5. Procédé (10) selon l'une des revendications 3 ou 4, dans lequel l'émetteur-récepteur, qui est statique, est un noeud d'accès du système de communication mobile.

6. Procédé (10) selon l'une des revendications 3 à 5, dans lequel l'émetteur-récepteur, qui est mobile, est un véhicule.

7. Procédé (10) selon la revendication 6, dans lequel la déduction (16) est basée en outre sur des informations concernant des directions de conduite et/ou des informations concernant une future trajectoire planifiée du véhicule.

8. Procédé (10) selon l'une des revendications 1 à 7, dans lequel la récupération (16) des informations prédéterminées sur l'étalement de retard est basée sur des informations d'étalement de retard stockées dans une base de données.

9. Procédé (10) selon la revendication 8, dans lequel la base de données comprend une carte radio tridimensionnelle d'étalements de retard.

10. Procédé (10) selon l'une des revendications 1 à 9, dans lequel la déduction (16) de la configuration de grille temps-fréquence comprend en outre la sélection de l'un parmi un groupe limité de modes de mobilité, les modes de mobilité ayant différentes configurations de grille temps-fréquence.

11. Procédé (10) selon l'une des revendications 1 à 10, comprenant en outre la mesure d'informations sur l'étalement de retard et le stockage des informations sur l'étalement de retard.

12. Programme informatique ayant un code de programme servant à exécuter au moins un procédé (10) selon l'une des revendications 1 à 11, lorsque le programme informatique est exécuté sur un ordinateur, un processeur ou un composant matériel programmable.

13. Appareil (20) de détermination d'une configuration pilote et de grille temps-fréquence pour une liaison radio entre deux émetteurs-récepteurs d'un système de communication mobile, l'appareil (20) comprenant :

   un module d'émetteur-récepteur (22) pour communiquer dans le système de communication mobile ; et
   un module de traitement (24) configuré pour :

      contrôler le module d'émetteur-récepteur (22), et
      exécuter au moins un procédé (10) selon l'une des revendications 1 à 11.

14. Noeud d'accès (200) d'un système de communication sans fil comprenant l'appareil (20) selon la revendication 13.

**15.** Équipement utilisateur (200) pour un système de communication sans fil comprenant l'appareil (20) selon la revendication 13.

obtaining information on a relative velocity between the two transceivers ~12

retrieving predetermined information on a delay spread of a radio channel between two transceivers ~14

deriving the time-frequency grid configuration for the radio link based on the information on the relative velocity and based on the information on the delay spread and determining the pilot configuration in relation to the time-frequency grid ~16

<u>10</u>

**Fig. 1**

**200**

Control module ~24

20~

One or more interfaces ~22

**Fig. 2**

$$1 < \text{const.} = TF \quad ; \quad \frac{T}{F} \quad = \quad \frac{\sigma_t}{\sigma_f} \quad \overset{!}{=} \quad \frac{\tau_{max}}{2\nu_{max}}$$

① Sampling

② TF-grid
A=diag(T, F)

③ TF-spreads of TX
and RX pulse

④ Channel

delay $\mu_2$

U

Doppler $\mu_1$

## Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200014512 A1
- US 20180049073 A1

- US 20200045562 A1
- US 20030064733 A1

**Non-patent literature cited in the description**

- **T. WANG ; J. G. PROAKIS ; E. MASRY ; J. R. ZEIDLER.** Performance degradation of ofdm systems due to doppler spreading. *IEEE Transactions on Wireless Communications,* 2006, vol. 5 (6), 1422-1432

- **P. JUNG ; G. WUNDER.** Wssus pulse design problem in multicarrier transmission. *IEEE Transactions on Communications,* 2007, vol. 55 (9), 1822-1822